(19) **Europäisches Patentamt / European Patent Office / Office européen des brevets**

(11) **EP 1 821 210 A2**

(12) **EUROPEAN PATENT APPLICATION**

(43) Date of publication:
**22.08.2007 Bulletin 2007/34**

(51) Int Cl.:
***G06F 9/45*** *(2006.01)*

(21) Application number: **07102078.8**

(22) Date of filing: **09.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.02.2006 KR 20060016216**

(71) Applicant: **Samsung Electronics Co., Ltd.**
**Suwon-si**
**442-742 Gyeonggi-Do (KR)**

(72) Inventor: **Lee, Sang-gyu**
**Seoul (KR)**

(74) Representative: **Brandon, Paul Laurence**
**APPLEYARD LEES**
**15 Clare Road**
**Halifax HX1 2HY (GB)**

(54) **Method of calling a method in virtual machine environment and system including a virtual machine processing the method**

(57) A method of calling a method in a virtual machine environment is provided. The method includes reading a command of a first method; storing an address of the command code in predetermined memory space if the command is a command that calls a second method; changing an address of previously-compiled code of the second method and writing the address in the stored address; and directly branching to the address of newly-compiled code of the second method and calling the second method if the first method is performed.

**FIG. 6**

EP 1 821 210 A2

**Description**

Methods and apparatus consistent with the present invention relate to calling a method in a virtual machine environment. More particularly, the present invention relates to an improved method of calling a method that uses a table including multiple slots in which the address of a method is written, and a system including a virtual machine processing the method.

Because application programs are hardware dependent, separate versions of the same application must be designed for each hardware platform. In order to develop an application program which is platform independent, a virtual machine, which abstracts a hardware platform, has been developed. One representative virtual machine is the Java virtual machine.

In order to realize platform independence, the Java language was developed by SUN Microsystems. Java can be used to produce software for electronics such as microwave ovens and remote controllers.

In order to generate a platform-independent executable file, Java compiles source code into a unique bytecode format, and uses the Java virtual machine to execute the code.

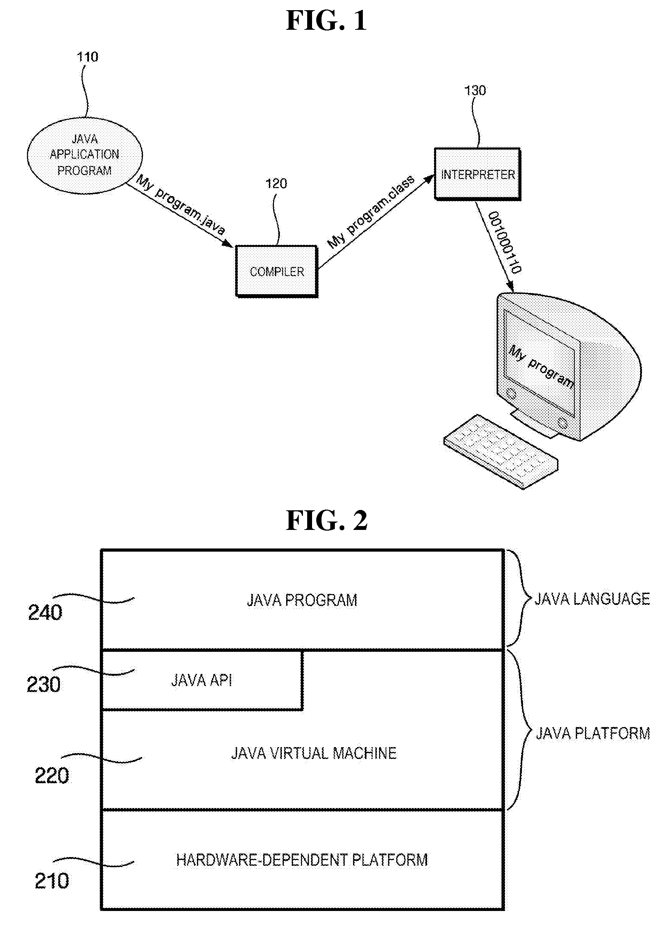

As shown in FIG. 1, a Java program 110 having the ".java" extension is compiled by a compiler 120 such as "javac", and the program file is converted into a Java executable file having the ".class" extension, i.e., a file written in Java bytecode. Then the class file is interpreted by the internal interpreter 130 of the Java Virtual Machine (JVM), and is executed.

FIG. 2 illustrates a layer structure of a platform for executing a Java program. The layer structure includes a Java platform 240 written in Java that includes the JVM and the Java Application Program Interface (JAPI) 230, and a hardware-dependent platform 210. Under such a structure, because a Java executable file is a class file including bytecode, which is platform-neutral code, the file can be executed in the Java runtime environment regardless of which system the program has been developed on.

The JVM is useful for executing platform-independent application programs, but its execution speed is very low compared with hardware-dependent application programs. In other words, when executing a Java application program, because an interpreter in the JVM sequentially executes the bytecode program, the execution speed is low.

In order to overcome the execution speed, the Just-In-Time (JIT) compiler was developed.

The JIT compiler compiles a called method at the point of time when the method is called while the JVM executes a Java application, and directly executes compiled machine code instead of bytecode. Here, because compiled machine code is stored in memory, the code does not have to be interpreted every time, the virtual machine can be optimized for the hardware platform, and the execution speed is higher than the interpretation method.

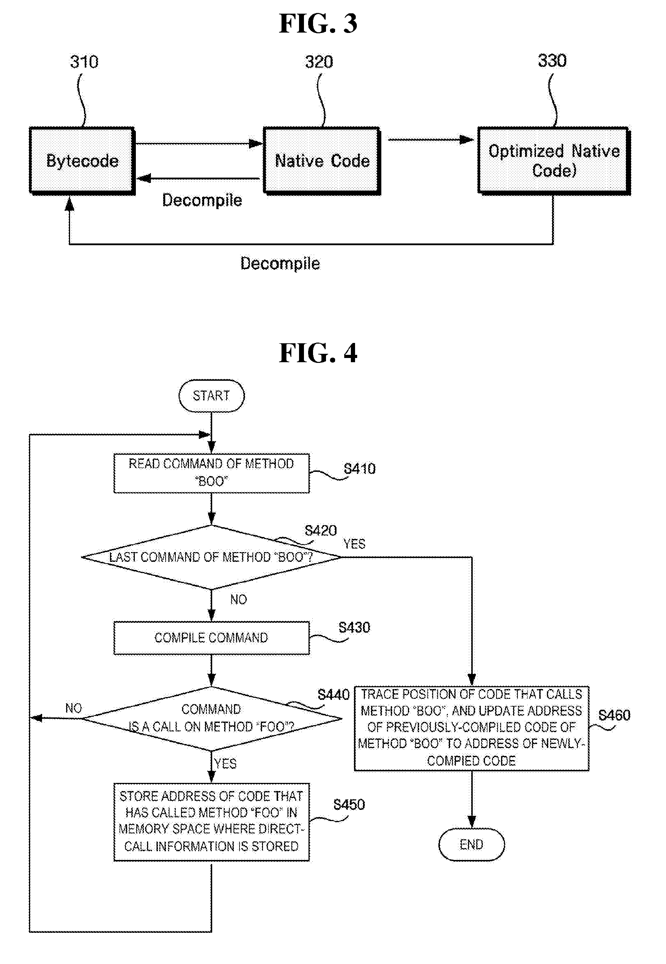

FIG. 3 illustrates a state change of methods in the JVM including the JIT compiler. Referring to FIG. 3, bytecode 310 is converted into compiled code 320 by the JIT compiler for quick execution, and JIT-compiled code 320 is optimized for quicker execution. The JTT-compiled code 320, 330 is converted into bytecode 310 to secure memory. Here, the native code is platform-dependent machine code.

Because the memory addresses of the methods are changed when the methods are changed, the address change of the methods should be considered when calling a method.

The conventional method call is operated as follows.

First, a load command that gets a method table from a class object is performed. Here, the method table indicates a multiple of data structures in which slots are constituted in an array form. Then, a load command that reads the address of the method to be called from a slot where the address of the method has been recorded is performed, and a command that branches to the address is performed. Hence, if the address of a called method is changed, content of a slot corresponding to the method should be updated in the method table.

According to the conventional art mentioned above, whenever a method is called, the process of reading the address of the method from the method table should be performed. However, in this case, because the process should be performed in the case where the method is kept constant, unnecessary system overhead is generated. Moreover, in the case of a virtual machine installed in a system having few resources, such a system overhead can significantly affect the system performance.

An aim of preferred embodiments of the present invention is to provide a method-calling method, which minimizes overhead of a system by directly accessing the address of a method to be called when calling a method in a virtual machine environment, and a system having the virtual machine that performs the method.

According to an aspect of the present invention, there is provided a method-calling method in a virtual machine environment, the method including reading a command of a first method; storing an address of the command code in predetermined memory space if the command is a command that calls a second method; changing an address of previously-compiled code of the second method and writing the address in the stored address; and directly branching to the address of newly-compiled code of the second method and calling the second method if the first method is performed.

According to another aspect of the present invention, there is provided a system including a direct-call-information management module, which stores an address of the command code in predetermined memory space, changes the address of the previously-compiled code to the address of the newly-compiled code, and records the address in the predetermined memory space, if a command of a first method is a command that calls a second method; and a virtual machine, which directly branches to the address of newly-compiled code of the second method and calls the second method if the first method is performed.

Further features of the present invention are set out in the appended claims.

The present invention will become apparent by describing in detail exemplary embodiments thereof with reference to the attached drawings, in which:

FIG. 1 illustrates a general process of executing a Java program.

FIG. 2 illustrates a layer structure of a platform that executes a Java program.

FIG. 3 illustrates a state change of methods in the Java Virtual Machine that includes the Just-In-Time compiler.

FIG. 4 is a flow chart illustrating a process of compiling a method according to an exemplary embodiment of the present invention.

FIG. 5 illustrates a structure of a method block according to an exemplary embodiment of the present invention.

FIG. 6 illustrates an operation of a method call according an exemplary embodiment of the present invention.

FIG. 7 is a block diagram illustrating a system in which a virtual machine is installed according to an exemplary embodiment of the present invention.

Exemplary embodiments of the present invention will be described in detail with reference to the accompanying drawings.

Aspects and features of the present invention and methods of accomplishing the same may be understood more readily by reference to the following detailed description of the exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims.

The present invention is described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded into a computer or other programmable data processing apparatus to cause a series of operational steps to be performed in the computer or other programmable apparatus to produce a computer implemented process such that the instructions that execute in the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in reverse order depending upon the functionality involved.

For explanatory convenience, it is assumed that a method "boo" includes code that calls a method "foo" of a class A-type object "obj".

```
void boo()
{
   A obj = new A( );
   ...
   obj.foo( );
   ...
}
```

Here, an operation executed when a method "boo" is Just-In-Time-compiled is illustrated in FIG. 4.

Referring to FIG. 4, when the JIT compiler starts to compile the method "boo", the command of the method "boo" is read S410. Here, it is recognized whether the command is the last command of the method "boo" S420.

If the command is the last command of the method "boo", after step S460 is performed, the compiling of the method is completed, otherwise steps S430, S440 and S450 are performed. The operation of step S460 is described later.

In step S420, if the current command is not the last command of the method "boo", the JIT compiler compiles the current command S430. Here, it is examined whether the compiled command is a call for the method "foo" S440.

Here, in the case where the compiled command is not a call for the method "foo", the next command of the method "boo" is read by returning back to step S410, otherwise the JIT compiler stores an address of code that has called the method "foo" in memory space where direct-call information is stored S450.

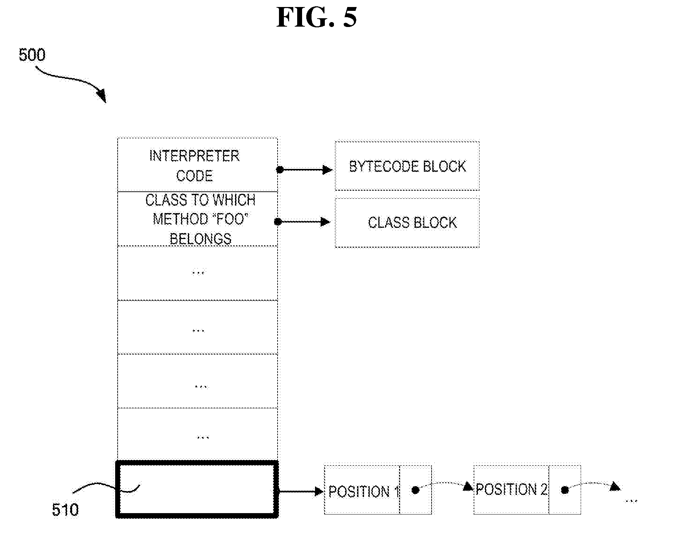

Here, the direct-call information can be stored in a method block 500 as illustrated in FIG. 5.

The method block 500 stores information about the method "foo" such as interpreter code information that represents bytecode of the method "foo", the code size of the method "foo", and the start position of code of the method "foo", and includes direct-call information that calls the method "foo". The other information except the direct-call information 510 can be information stored in the conventional method block.

The direct-call information can be managed by being connected via an address of code that calls the method "foo" (indicated as "position 1" and "position 2" in FIG. 5) or a linked list.

The management on the direct-call information can be performed by the JIT compiler, but can also be performed by a separate software module.

Further, in step 420, in the case where the currently-read command is the last command of the method "boo", the position of code that calls the method "boo" should be traced, the previously-compiled address is updated to the address of newly-compiled code S460, and the compile of the method "boo" is terminated.

In other words, if the compile of the method "boo" is completed, because the method "boo" can be called by another method, from now on, the method should be called to a newly-compiled position.

When the compile of the method "boo" is completed according to the method illustrated in FIG. 4, operations corresponding to code of the compiled method "boo" are performed. Here, if the method "foo" is called in the method "boo", the method "foo" is not indirectly called via a separate method table. Because the address for the code of the method "boo" that calls the method "foo" is stored in memory space where direct-call information is stored, the method "foo" can be directly called by recording the address of the compiled method "foo".

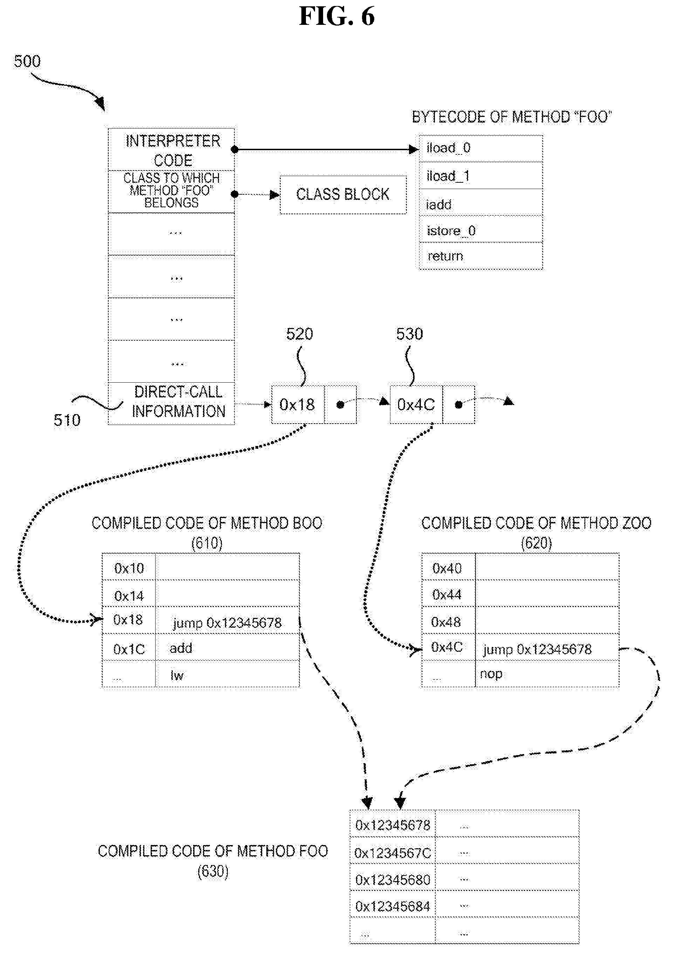

FIG. 6 illustrates an operation of a method call according to an exemplary embodiment of the present invention; it is assumed that the method "boo" and the method "zoo" include a command that calls the method "foo", respectively.

Referring to FIG. 6, a command to branch to the method "boo" resides in address 0x18 of the compiled code 610 of the method "boo", and a command to branch to the method "foo" resides in address 0x4C of the compiled code 620 of the method "zoo".

Therefore, for example, when the method "boo" and the method "zoo" are compiled, the address 0x18 of the compiled code 610 of the method "boo" that calls each method "foo" and the address 0x4C of the compiled code 610 of the method "zoo" are stored in the linked list 520, 530 linked with the direct-call information.

Further, in the case where the compiled code 610 of the method "boo" or the compiled code 620 of the method "zoo" are executed, when the method "foo" is called, the code branches to the address (here, 0x12345678) of the compiled code 630 of the direct method "foo"; the branch is expressed as "jump 0x12345678" in FIG. 6.

According to the conventional art, in the case where the method "foo" is called within the method "boo", the following process is performed.

$$T = 0x12341234 \qquad (\text{step } 1)$$

$$T = LD(T) \qquad (\text{step } 2)$$

$$JR\ T \qquad (\text{step } 3)$$

In step 1, a slot address of the method is acquired in a conventional method table; in step 2, an address, in which the compiled code of the method "foo" has been recorded, is acquired from the slot address acquired in step 1; and in step 3, the code branches to the address acquired in step 2.

However, according to the present invention, in the case where the method "foo" is called within the method "boo", only one step needs to be performed as follows.

$$JR\ 0x12341234 \qquad (step\ 1)$$

Further, in the case where a method to be called is defined as "private" or "final", the method can be directly called according to the method mentioned above.

Further, in the case where the compiled code needs to be corrected in a virtual machine to which the method-calling method according to the present invention is applied, when the execution of other threads has stopped, the correction can be handled collectively.

Further, in the case of a virtual machine having a decompiler to which the method-calling method according to the present invention is applied, in order to overcome the lack of memory, the compiled code can be converted into code for an interpreter. Here, according to the conventional art, a thread-stop mechanism of the garbage collector can be used or the thread can be stopped in other ways so that the address on the method call can be promptly updated.

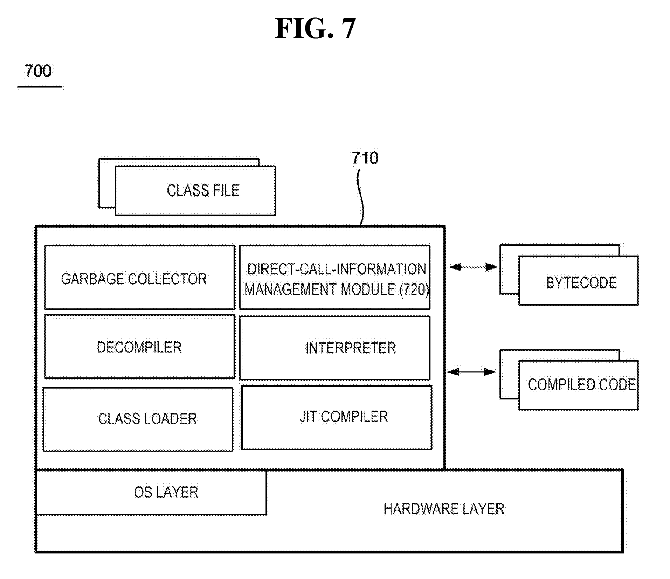

FIG. 7 is a block diagram illustrating a system in which a virtual machine is installed according to an exemplary embodiment of the present invention.

Referring to FIG. 7, a system 700 according to the present invention includes a virtual machine 710 having a direct-call-information management module 720.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside in the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. The direct-call-information management module 720 manages direct-call information described above, and the module can be operated when a method is changed from one using bytecode to one using compiled code or vice versa.

Here, the direct-call-information management module 720 can store the address of code that calls a method in the form of the linked list in the method block of a called method, and the address of compiled code of the called method can be updated. Because such a process has been already described in FIGS. 4 to 6, the description is omitted here.

Further, in FIG. 7, the direct-call-information management module 720 is separately illustrated with the JIT compiler in the virtual machine 710, but the JIT compiler can be implemented to provide a function provided by the direct-call-information management module 720.

In FIG. 7, because the garbage collector, interpreter, decompiler, and class loader of the illustrated virtual machine 710 are the same as those of the conventional art, a detailed description is omitted here.

It should be understood by those of ordinary skill in the art that various replacements, modifications and changes may be made in the form and details without departing from the spirit and scope of the present invention as defined by the following claims. Therefore, it is to be appreciated that the above described exemplary embodiments are for purposes of illustration only and are not to be construed as limitations of the invention.

The method and apparatus of preferred embodiments of the present invention has an advantage that system performance is improved by minimizing system overhead by directly accessing the address of a method to be called when calling the method in virtual machine environment.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of calling in a virtual machine environment, the method comprising:

   reading a command of a first method;
   storing an address of a command code in a predetermined memory space if the command calls a second method;
   changing an address of a previously-compiled code of the second method and writing the changed address of the previously-compiled code of the second method in the stored address of the command code as an address of newly-compiled code; and
   branching directly to the address of newly-compiled code of the second method and calling the second method if the first method is performed.

2. The method of claim 1, wherein the reading comprises updating the address of a previously-compiled code of the first method to an address of the newly-compiled code of the first method by tracing a position of a code that calls the first method, if the command is the last command.

3. The method of claim 1 or 2, wherein the predetermined memory space is included in a method block of the second method.

4. The method of any preceding claim, wherein the predetermined memory space is formed by a linked list.

5. A system (700) comprising:

   a direct-call-information management module (720) that stores an address of a command code in a predetermined memory space, changes an address of a previously-compiled code of a second method into an address of the newly-compiled code of the second method, and records the address of the newly-compiled code of the second method in the stored address of the command code, if a command of a first method calls the second method; and
   a virtual machine (710) that directly branches to the address of newly-compiled code of the second method and calls the second method if the first method is performed.

6. The system (700) of claim 5, wherein the direct-call-information management module (720) traces a position of a command code that calls the first method, and updates an address of a compiled code of the first method into an address of the newly-compiled code of the first method.

7. The system (700) of claim 5 or 6, wherein the predetermined memory space is included in a method block of the second method.

8. The system (700) of any one of claim 5-7, wherein the predetermined memory space is formed by a linked list.

# FIG. 1

110

JAVA APPLICATION PROGRAM

My program.java

120

COMPILER

My program.class

130

INTERPRETER

001000110

My program

# FIG. 2

| | JAVA PROGRAM | JAVA LANGUAGE |
|---|---|---|
| 240 | | |
| 230 | JAVA API | |
| 220 | JAVA VIRTUAL MACHINE | JAVA PLATFORM |
| 210 | HARDWARE-DEPENDENT PLATFORM | |

# FIG. 3

310              320              330

| Bytecode | → | Native Code | → | Optimized Native Code) |

← Decompile

Decompile

# FIG. 4

START

READ COMMAND OF METHOD "BOO" — S410

LAST COMMAND OF METHOD "BOO"? — S420
— YES
— NO

COMPILE COMMAND — S430

COMMAND IS A CALL ON METHOD "FOO"? — S440
— NO
— YES

STORE ADDRESS OF CODE THAT HAS CALLED METHOD "FOO" IN MEMORY SPACE WHERE DIRECT-CALL INFORMATION IS STORED — S450

TRACE POSITION OF CODE THAT CALLS METHOD "BOO", AND UPDATE ADDRESS OF PREVIOUSLY-COMPILED CODE OF METHOD "BOO" TO ADDRESS OF NEWLY-COMPIED CODE — S460

END

# FIG. 5

500

| | |
|---|---|
| INTERPRETER CODE | → BYTECODE BLOCK |
| CLASS TO WHICH METHOD "FOO" BELONGS | → CLASS BLOCK |
| ... | |
| ... | |
| ... | |
| ... | |

510

POSITION 1 • → POSITION 2 • → ...

# FIG. 6

500

INTERPRETER CODE

CLASS TO WHICH METHOD "FOO" BELONGS

...

...

...

...

DIRECT-CALL INFORMATION

510

CLASS BLOCK

BYTECODE OF METHOD "FOO"

| iload_0 |
| iload_1 |
| iadd |
| istore_0 |
| return |

520

530

| 0x18 | • |

| 0x4C | • |

COMPILED CODE OF METHOD BOO
(610)

| 0x10 | |
| 0x14 | |
| 0x18 | jump 0x12345678 |
| 0x1C | add |
| ... | lw |

COMPILED CODE OF METHOD ZOO
(620)

| 0x40 | |
| 0x44 | |
| 0x48 | |
| 0x4C | jump 0x12345678 |
| ... | nop |

COMPILED CODE OF METHOD FOO
(630)

| 0x12345678 | ... |
| 0x1234567C | ... |
| 0x12345680 | ... |
| 0x12345684 | ... |
| ... | ... |

# FIG. 7

700

710

CLASS FILE

GARBAGE COLLECTOR

DIRECT-CALL-INFORMATION
MANAGEMENT MODULE (720)

DECOMPILER

INTERPRETER

CLASS LOADER

JIT COMPILER

BYTECODE

COMPILED CODE

OS LAYER

HARDWARE LAYER